# EUROPÄISCHE PATENTSCHRIFT

(11) **EP 4 654 530 B1**
(45) Veröffentlichungstag und Bekanntmachung des Hinweises auf die Patenterteilung: **17.06.2026**
(21) Anmeldenummer: 24176920.7
(22) Anmeldetag: 21.05.2024
(51) Int. Cl.: H04L 12/12

(54) **VERFAHREN ZUR KOPPLUNG ZWEIER GERÄTE EINES GEBÄUDEAUTOMATIONSSYSTEMS UND GEBÄUDEAUTOMATIONSSYSTEM**
METHOD FOR COUPLING TWO DEVICES OF A BUILDING AUTOMATION SYSTEM AND BUILDING AUTOMATION SYSTEM
PROCÉDÉ DE COUPLAGE DE DEUX APPAREILS D'UN SYSTÈME D'AUTOMATISATION DE BÂTIMENT ET SYSTÈME D'AUTOMATISATION DE BÂTIMENT

(43) Veröffentlichungstag der Anmeldung: 26.11.2025
(73) Patentinhaber: GIRA GIERSIEPEN GmbH & Co. KG, 42477 Radevormwald (DE)
(72) Erfinder: Kerkmann, Phillip, 41363 Jüchen (DE)
(74) Vertreter: Angerhausen, Christoph

(56) Entgegenhaltungen:
- US-A1- 2014 309 790
- US-A1- 2016 149 904
- US-A1- 2020 274 707

## Beschreibung

Die Erfindung betrifft ein Verfahren zur Kopplung zweier Geräte eines Gebäudeautomationssystems, und ein Gebäudeautomationssystem.

Ein entsprechendes Gebäudeautomationssystem ist oder umfasst beispielsweise eine Türkommunikationssystem. Ein Türkommunikationssystem kann mindestens eine Außenstation, Innenstation, Wohnungsstation, Klingel, Kamera oder dergleichen aufweisen, die miteinander kommunizieren können.

Gebäudeautomationssysteme umfassen üblicherweise eine Mehrzahl von Geräten, die miteinander kommunizieren sollen, z.B. entsprechend einer vorgegebenen Projektierung. Die Konfigurationen, Parameter, und Zuordnungen der jeweiligen Geräte des Gebäudeautomationssystems können dabei auf einem Server bzw. einer Registrierungsstelle gespeichert sein. Auch eine Benutzerkontoverwaltung kann durch den Server bzw. Registrierungsstelle gegeben sein. Insbesondere können einem oder mehreren Benutzerkonten jeweilige Geräte des Gebäudeautomationssystems zugeordnet sein. Ein Benutzer kann beispielsweise auf die seinem Benutzerkonto zugeordneten Geräte zugreifen, diese verwalten oder nutzen.

Dazu ist eine Zuordnung eines Geräts des Gebäudeautomationssystems zu einem anderen Gerät und/oder einem Benutzerkonto notwendig, bei der das zuzuordnende Gerät der Registrierungsstelle mitgeteilt wird; dies wird beispielhaft in US 2020/274707 A1 gezeigt. Für eine einfache Zuordnung kann zudem ein zweites Gerät, z.B. ein Mobilgerät, vorgesehen sein, über das auf das Benutzerkonto zugegriffen werden kann und das der Registrierungsstelle das zuzuordnende andere Gerät oder das Benutzerkonto mitteilen kann. Dazu ist, zusätzlich von einer Datenübertragung des ersten Geräts zu der Registrierungsstelle, eine Datenübertragung von dem ersten Gerät zu dem zweiten Gerät notwendig.

Eine entsprechende Übertragung zwischen dem zuzuordnenden ersten Gerät und dem zweiten Gerät kann über Bluetooth oder NFC erfolgen. Dazu muss insbesondere das erste Gerät zwingend eine entsprechende zusätzliche Hardwarekomponente aufweisen. Nach dem Zuordnen bzw. Koppeln erfolgt die Kommunikation üblicherweise aber über den Server bzw. die Registrierungsstelle, so dass die zusätzliche Hardwarekomponente in der Regel nur für das Koppeln, mithin einmalig oder nur sehr selten, verwendet wird. Diese zusätzliche Hardwarekomponente verursacht damit Kosten, die möglichst vermieden werden sollen.

Zudem können die zusätzlichen Hardwarekomponenten ausfallen und/oder nicht funktionieren, so dass das entsprechende Gerät trotz prinzipieller Nutzbarkeit für seine primäre Funktion (z.B. als Klingel oder Türstation) nicht mehr gekoppelt oder zugeordnet werden kann und ausgetauscht werden muss.

Es ist Aufgabe der vorliegenden Erfindung, diese Nachteile zu überwinden. Diese Aufgabe wird durch ein Verfahren mit den Merkmalen des Anspruchs 1 und ein Gebäudeautomationssystem mit den Merkmalen des Anspruchs 12 gelöst.

Die Erfindung betrifft ein Verfahren zur Kopplung zweier Geräte eines Gebäudeautomationssystems, wobei das Verfahren die Schritte umfasst:
- Übermitteln einer Zeichenfolge von einem ersten Gerät des Gebäudeautomationssystems an eine mit dem ersten Gerät zum Datenaustausch verbundene Registrierungsstelle;
- Registrieren der Zeichenfolge durch die Registrierungsstelle;
- Aussenden eines die Zeichenfolge repräsentierenden Audiosignals durch das erste Gerät, bevorzugt mit einem Lautsprecher des ersten Geräts;
- Empfangen des Audiosignals durch ein zweites Gerät des Gebäudeautomationssystems, bevorzugt mit einem Mikrophon des zweiten Geräts;
- Erfassen der mit dem empfangenen Audiosignals repräsentierten Zeichenfolge mit dem zweiten Gerät;
- Übermitteln der Zeichenfolge von dem zweiten Gerät an die Registrierungsstelle, wobei die Registrierungsstelle zum Datenaustauch mit dem zweiten Gerät verbunden ist;
- Zuordnen des ersten Geräts und des zweiten Geräts durch die Registrierungsstelle.

Das erfindungsgemäße Verfahren ermöglicht, dass eine Zuordnung des ersten Geräts über ein Audiosignal erfolgen kann. Damit kann dezidierte Hardware, z.B. eine Bluetooth-Schnittstelle, NFC, oder ein Display, die das erste Gerät für eine herkömmliche Kopplung haben müsste, entfallen. Somit kann eine Kopplung mit bereits vorhandenen Hardwarekomponenten durchgeführt sein oder werden. Insbesondere wenn das erste Gerät bereits einen Lautsprecher oder ein anderes geeignetes Mittel zum Aussenden eines Audiosignals aufweist, können Kosten gespart werden.

Mindestens einer, mehrere oder alle Schritte des Verfahrens kann computer-implementiert sein. In einigen Ausführungsformen kann die Reihenfolge eines oder mehrerer Schritte des Verfahrens geändert sein.

Mit "ein die Zeichenfolge repräsentierendes Audiosignal" kann gemeint sein, dass das Audiosignal Informationen enthält, mittels derer sich die Zeichenfolge eindeutig rekonstruieren lässt. Beispielsweise kann das Audiosignal Wellen aufweisen und/oder aus Wellen bestehen, deren Frequenzen, Amplituden und/oder Phasen jeweils eindeutig ein Zeichen der Zeichenfolge bestimmen und/oder entsprechen können.

Mit "Erfassen der mit dem empfangenen Audiosignals repräsentierten Zeichenfolge" kann gemeint sein, dass die Zeichenfolge basierend auf den in den Audiosignal enthaltenen Informationen rekonstruiert wird. Damit kann eine Übertragung der Zeichenfolge von dem ersten Gerät an das zweite Gerät über das Audiosignal und/oder akustisch erfolgen.

Es kann vorgesehen sein, dass das erste Gerät und das zweite Gerät miteinander gekoppelt sein können, wenn das erste Gerät und das zweite Gerät zugeordnet sind. Ein Zuordnen des ersten Geräts und des zweiten Geräts kann ein Koppeln der jeweiligen Geräte umfassen.

Ein "Zuordnen des ersten Geräts und des zweiten Geräts" kann ein Zuordnen zu einem Benutzerkonto umfassen, das durch das zweite Gerät definiert, angegeben, charakterisiert ist oder wird, oder der Registrierungsstelle durch das zweite Gerät mitgeteilt ist oder wird.

Das Zuordnen des ersten Geräts und des zweiten Geräts durch die Registrierungsstelle kann ein Verknüpfen des ersten Geräts mit einem oder dem Benutzerkonto umfassen. Das Benutzerkonto kann ein Benutzerkonto sein, dem das zweite Gerät zugeordnet ist.

In einigen Ausführungsformen kann eine App und/oder ein Programm vorgesehen sein, über die ein Benutzer auf sein Benutzerkonto zugreifen kann, und/oder dem Benutzerkonto zugeordnete Geräte verwalten oder konfigurieren kann. In einigen Ausführungsformen kann die App und/oder das Programm bei dem Verfahren zur Zuordnung verwendet werden, um Schritte des Verfahrens zu bestätigen und/oder um Informationen zur Zuordnung mitzuteilen. Die App und/oder das Programm kann dazu dienen, das erste Gerät einem entsprechenden Benutzerkonto zuzuordnen. Die App und/oder das Programm kann auf dem zweiten Gerät laufen, und/oder das zweite Gerät kann dazu eingerichtet sein, die App und/oder das Programm auszuführen.

Es kann vorgesehen sein, dass beim Übermitteln der Zeichenfolge von dem zweiten Gerät zu der Registrierungsstelle das zweite Gerät eine eindeutige Kennung des zweiten Geräts, und/oder eine eindeutige Kennung des Benutzerkontos, an die Registrierungsstelle übermitteln kann. Damit kann in einigen Ausführungsformen die Registrierungsstelle das erste Gerät dem zweiten Gerät und/oder dem Benutzerkonto zuordnen.

Vor dem Übermitteln der Zeichenfolge von dem ersten Gerät an die Registrierungsstelle kann die Zeichenfolge von dem ersten Gerät erstellt sein oder werden. Es kann vorgesehen sein, dass die Zeichenfolge dynamisch von dem ersten Gerät erstellt sein oder werden kann. Beim Erzeugen der Zeichenfolge kann eine zufällige Zeichenfolge als Zeichenfolge erzeugt werden. In einigen Ausführungsformen kann ein Teil der Zeichenfolge zufällig erstellt und/oder gewählt sein oder werden. Es kann aber auch vorgesehen sein, dass die Zeichenfolge vollständig zufällig erstellt und/oder gewählt sein oder werden kann.

Damit kann, wenn das erste Gerät mehreren zweiten Geräten und/oder mehreren Benutzerkonten zugeordnet werden soll bzw. wird, und/oder wenn das Verfahren mindestens einmal wiederholt wird, jeweils eine unterschiedliche Zeichenfolge zum Zuordnen verwendet werden.

Alternativ oder zusätzlich kann vorgesehen sein, dass die Zeichenfolge dem ersten Gerät zugewiesen sein oder werden kann und/oder in dem ersten Gerät hinterlegt sein kann. In einigen Ausführungsformen kann beispielsweise die Zeichenfolge bei der Produktion des ersten Geräts von dem Hersteller vorgegeben sein, und in dem ersten Gerät hinterlegt sein oder werden.

Die Zeichenfolge kann ein oder mehrere Zeichen umfassen. Die Zeichenfolge kann ein alphanumerischer Code sein oder aufweisen. Die Zeichenfolge kann eine eindeutige Zeichenfolge sein oder umfassen. Die Zeichenfolge kann das erste Gerät eindeutig kennzeichnen oder identifizieren. In einigen Ausführungsformen kann die Zeichenfolge, und/oder zumindest ein Teil der Zeichenfolge, eines oder mehrere aus Typbezeichnung, Typnummer, Chargennummer oder Herstellungsdatum des ersten Geräts umfassen. In einigen Ausführungsformen kann die Zeichenfolge, und/oder zumindest ein Teil der Zeichenfolge, eine Versionsnummer einer Firmware des ersten Geräts umfassen. Alternativ oder zusätzlich kann die Zeichenfolge, und/oder zumindest ein Teil der Zeichenfolge, ein aktuelles Datum und/oder eine aktuelle Uhrzeit umfassen. Das aktuelle Datum kann beispielsweise das Datum sein, an dem die Zeichenfolge erstellt ist oder wird. Die aktuelle Uhrzeit kann beispielsweise die Uhrzeit sein, zu der die Zeichenfolge erstellt ist oder wird.

Die Zeichenfolge kann in einigen Ausführungsformen beispielsweise durch Bits und/oder durch Binärzeichen repräsentiert sein, und/oder solche umfassen oder aus solchen bestehen. Die Zeichenfolge kann in einer Zeichencodierung vorliegen und/oder eine codierte Zeichenfolge sein, die durch Bits und/oder Binärzeichen codiert sein kann. Die Zeichenfolge kann beispielsweise UTF-8, ASCII oder eine andere geeignete Zeichencodierung umfassen. Ist die Zeichenfolge geeignet codiert, kann sie von einem Menschen einfach lesbar und/oder für einen Menschen verständlich sein. Insbesondere kann vorgesehen sein, dass wenn die Zeichenfolge zumindest teilweise Metadaten, Typbezeichnung, Typnummer, Chargennummer oder Herstellungsdatum, Versionsnummer einer Firmware, einen Zeitstempel oder dergleichen umfasst, diese Informationen einem Benutzer zur Überprüfung und/oder Plausibilitätsprüfung angezeigt werden können, z.B. von dem zweiten Gerät.

Das Audiosignal kann eine oder mehrere Wellen mit einer jeweiligen Frequenz umfassen. Eine Welle kann eine Sinus- und/oder Cosinuswelle sein oder aufweisen. Eine bestimmte Frequenz und/oder Amplitude der Welle kann ein Zeichen der Zeichenfolge repräsentieren. Die Frequenzen und/oder das Audiosignal kann ein Spektrum haben, und/oder durch ein Spektrum abgebildet und/oder repräsentiert sein oder werden. Alternativ oder zusätzlich kann die Phase der jeweiligen Wellen ein Zeichen der Zeichenfolge repräsentieren, und/oder zur Unterscheidung verschiedener Zeichen dienen.

Bei dem Aussenden des Audiosignals kann das Audiosignal von dem ersten Gerät ausgesendet werden. Zwischen zwei Frequenzen der jeweiligen Wellen des Audiosignals kann ein Frequenzabstand vorhanden sein. Der Frequenzabstand kann in einigen Ausführungsformen zwischen zwei benachbarten Frequenzen konstant sein. Alternativ kann der Frequenzabstand auch variabel sein. Das erste Gerät 10 kann einen Lautsprecher aufweisen, mit dem das Audiosignal ausgesendet werden kann.

Zeichen der Zeichenfolge, und/oder Zeichen der codierten Zeichenfolge, beispielsweise Bits und/oder Binärzeichen, können Frequenzen zugeordnet sein oder werden. Die Frequenzen des Audiosignals, und/oder der jeweiligen Wellen des Audiosignals können den Zeichen der Zeichenfolge und/oder der codierten Zeichenfolge, beispielsweise den die Zeichen repräsentierenden Bits bzw. Binärzeichen entsprechen und/oder zugeordnet sein können.

Das Audiosignal kann ein akustisches Signal sein. Das Audiosignal kann ein Schallsignal sein. Das Audiosignal kann einen Ton oder mehrere Töne umfassen. Ein Ton kann eine Sinusund/oder Cosinuswelle sein oder aufweisen, deren Frequenz eine Frequenz im Spektrums sein kann. Es kann vorgesehen sein, dass eine, mehrere oder alle Frequenzen des Spektrums und/oder des Audiosignals derart gewählt sind, dass sie für ein menschliches Ohr nicht hörbar sein können. In einigen Ausführungsformen kann eine, mehrere oder alle Frequenzen des Spektrums und/oder des Audiosignals größer als z.B. 18 kHz, größer als z.B. 20 kHz, und/oder größer als z.B. 22 kHz sein.

Bei oder nach dem Erfassen der mit dem empfangenen Audiosignal repräsentierten Zeichenfolge kann ein Spektrum des von dem zweiten Gerät erfassten Audiosignals erstellt werden. Das Spektrum kann von dem zweiten Gerät erstellt werden, z.B. mittels Spektralanalyse. Die Zeichenfolge kann basierend auf dem erstellten Spektrum erfasst werden.

Das erste Gerät und/oder das zweite Gerät kann eine Abtastrate und/oder Abtastfrequenz haben, die größer oder gleich das doppelte der größten Frequenz des Audiosignals sein kann. Die Abtastrate und/oder Abtastfrequenz des ersten Geräts und/oder des zweiten Geräts kann derart gewählt sein, dass das Spektrum ohne Aliasing erstellt, und/oder eine Spektralanalyse und/oder Frequenzanalyse des Audiosignal ohne Aliasing durchgeführt werden kann.

Beim Umwandeln des von dem zweiten Gerät empfangenen Audiosignals kann eine Spektralanalyse und/oder Frequenzanalyse durchgeführt werden. Beispielsweise kann eine Fourier-Transformation durchgeführt werden. Beim Umwandeln des von dem zweiten Gerät empfangenen Audiosignals kann ein Spektrum des empfangenen Audiosignals erstellt werden.

Bei oder vor dem Aussenden des Audiosignals kann die Zeichenfolge und/oder das Audiosignal moduliert werden. Es kann vorgesehen sein, dass die Zeichenfolge und/oder das Audiosignal mit einer Frequenz größer 18 kHz moduliert werden kann. Es kann vorgesehen sein, dass die Zeichenfolge und/oder das Audiosignal mit einer Frequenz größer 20 kHz moduliert werden kann. Das Audiosignal kann mit einer Trägerwelle moduliert sein oder werden. Die Frequenz der Trägerwelle kann eine Frequenz größer 18 kHz, oder größer 20 kHz, haben. In einigen Ausführungsformen kann die Trägerwelle genau eine Frequenz haben. In einigen anderen Ausführungsformen kann die Trägerwelle mehrere Frequenzen haben. Die Frequenzen des demodulierten und/oder nicht-modulierten Audiosignals können größer als die Frequenzen der Trägerwelle sein. In einigen Ausführungsformen kann zwischen der höchsten Frequenz der Trägerwelle und der niedrigsten Frequenz des demodulierten und/oder nicht-modulierten Audiosignals ein Frequenzabstand liegen.

Es kann vorgesehen sein, dass bei oder nach dem Modulieren der Zeichenfolge und/oder des Audiosignals ein Spektrum des Audiosignals die der Trägerwelle entsprechende Frequenz oder Frequenzen aufweisen kann. Ein Frequenzabstand zwischen der Frequenz der Trägerwelle und der niedrigsten Frequenz der die Zeichen bzw. die Zeichenfolge repräsentierenden Frequenzen kann in einigen Ausführungsformen größer als ein Frequenzabstand zweier benachbarter, die Zeichen bzw. die Zeichenfolge repräsentierenden Frequenzen sein. Beim Aussenden des Audiosignals kann ein moduliertes Audiosignal ausgesendet sein oder werden.

Beim Erfassen der von dem Audiosignal repräsentierten Zeichenfolge kann das Audiosignal demoduliert werden. Das Demodulieren kann in einigen Ausführungsformen dadurch erfolgen, dass die in dem von dem zweiten Gerät erstellten Spektrum vorhandene Frequenz der Trägerwelle bei dem Erfassen der Zeichenfolge nicht berücksichtigt wird.

Bei oder nach der Modulation und/oder Demodulation kann eine Fehlerkorrektur vorgesehen sein. Beispielsweise kann ein fehlerkorrigierender Algorithmus eingesetzt sein oder werden. Die Fehlerkorrektur kann eine Vorwärtsfehlerkorrektur umfassen. Die Fehlerkorrektur kann beispielsweise durch oder mit einem Reed-Solomon-Code durchgeführt sein oder werden, und/oder einen Reed-Solomon-Code umfassen oder verwenden. Die Fehlerkorrektur kann einen Prüfcode oder dergleichen umfassen oder verwenden, und/oder mit einem Prüfcode durchgeführt sein. Die Fehlerkorrektur kann eine zyklische Redundanzprüfung oder dergleichen umfassen.

Das erste Gerät kann ein Türkommunikationsgerät sein oder aufweisen. Es kann vorgesehen sein, dass das erste Gerät eine Wohnungsstation eines Türkommunikationssystems sein oder aufweisen kann. Ein entsprechendes Türkommunikationsgerät, z.B. eine Wohnungsstation, eine Klingel, Sprechanlage oder dergleichen, kann für seine reguläre bzw. übliche Funktion bereits ein Mittel zum Erzeugen eines Audiosignals, z.B. einen Lautsprecher oder dergleichen, aufweisen. Alternativ oder zusätzlich kann das zweite Gerät z.B. ein (UP-)Radio sein oder aufweisen. Es kann vorgesehen sein, dass das erste Gerät keine Bluetooth-Schnittstelle und/oder NFC-Schnittstelle haben kann.

Das zweite Gerät kann ein mobiles Gerät sein oder aufweisen. Es kann vorgesehen sein, dass das zweite Gerät ein Smartphone sein oder aufweisen kann. Das zweite Gerät kann ein Gerät sein, das üblicherweise ein Mittel zum Empfangen eines Audiosignals, z.B. ein Mikrophon, haben kann. Damit kann eine gesonderte Schnittstelle entfallen.

Die Registrierungsstelle kann ein Server sein oder aufweisen. Die Registrierungsstelle kann cloud-basiert sein. Die Registrierungsstelle kann mit dem ersten Gerät und dem zweiten Gerät drahtlos verbunden sein. Das Übertragen der Zeichenfolge von dem ersten Gerät und/oder von dem zweiten Gerät zu der Registrierungsstelle kann drahtlos erfolgen. Das erste Gerät und/oder das zweite Gerät kann eine Schnittstelle zur Kommunikation mit der Registrierungsstelle und/oder Datenübertragung haben. Alternativ oder zusätzlich kann vorgesehen sein, dass die Registrierungsstelle kabelgebunden mit dem ersten Gerät und/oder dem zweiten Gerät verbunden sein kann. Die kabelgebundene Verbindung kann Ethernet umfassen. Alternativ oder zusätzlich kann vorgesehen sein, dass die Registrierungsstelle kabelgebunden mit dem ersten Gerät und/oder dem zweiten Gerät über LAN und/oder WAN verbunden sein kann.

Die Registrierungsstelle kann nach dem Zuordnen eine Zuordnungsbestätigung an das erste Gerät und/oder das zweite Gerät übermitteln.

Nach dem Zuordnen kann das erste Gerät mit dem zweiten Gerät über die Registrierungsstelle kommunizieren. Nach dem Zuordnen kann alternativ oder zusätzlich das zweite Gerät mit dem ersten Gerät über die Registrierungsstelle kommunizieren.

Beim Registrieren der Zeichenfolge kann die Registrierungsstelle die Zeichenfolge in einer Datenbank hinterlegen. Bem Registrieren der Zeichenfolge kann die Registrierungsstelle die Zeichenfolge mit einer eindeutigen Kennung des ersten Geräts verknüpfen. Beim Zuordnen kann die Registrierungsstelle die von dem zweiten Gerät empfangene Zeichenfolge mit in einer oder der Datenbank hinterlegten Zeichenfolgen auf Übereinstimmung abgleichen.

Bei einer Übereinstimmung kann das erste Gerät zu dem zweiten Gerät und/oder einem Benutzerkonto zugeordnet werden, beispielsweise einem Benutzerkonto, mit dem das zweite Gerät verknüpft sein kann. In einigen Ausführungsformen kann beim Übermitteln der Zeichenfolge eine eindeutige Kennung des zweiten Geräts von dem zweiten Gerät an die Registrierungsstelle übermittelt werden, um das erste Gerät dem zweiten Gerät zuzuordnen. In einigen Ausführungsformen kann das erste Gerät einem, mehreren oder allen Benutzerkonten zugeordnet werden, denen das zweite Gerät zugeordnet ist. In einigen Ausführungsformen kann beim Übermitteln der Zeichenfolge eine eindeutige Kennung des Benutzerkontos von dem zweiten Gerät an die Registrierungsstelle übermittelt werden, um das erste Gerät dem Benutzerkonto zuzuordnen.

Die Datenbank kann dazu eingerichtet sein, Parameter und/oder Konfigurationen von Geräten des Gebäudeautomationssystems zu speichern.

Nach dem Zuordnen kann das erste Gerät ein einen Status des ersten Geräts repräsentierendes Status-Audiosignal aussenden. Das Status-Audiosignal kann in ähnlicher, analoger oder entsprechender Weise eine Statusmeldung des ersten Geräts repräsentieren, wie das Audiosignal die Zeichenfolge repräsentieren kann. Insbesondere kann die Statusmeldung eine Mitteilung, Meldung oder Nachricht zu einem Zustand oder Status des ersten Geräts enthalten. Es kann vorgesehen sein, dass die Statusmeldung eine Fehlermeldung umfassen kann. Die Statusmeldung kann eines oder mehrere Zeichen umfassen. Das Aussenden des Status-Audiosignal kann in ähnlicher, analoger oder entsprechender Weise wie das Aussenden des Audiosignals erfolgen. Das Status-Audiosignal kann eines oder mehrere Merkmale des Audiosignals aufweisen.

Es kann vorgesehen sein, dass das zweite Gerät das von dem ersten Gerät ausgesendete Status-Audiosignal empfangen und die Statusmeldung des ersten Geräts erfassen kann. Das Erfassen der Statusmeldung kann in ähnlicher, analoger oder entsprechender Weise wie das Erfassen der Zeichenfolge erfolgen. Es kann vorgesehen sein, dass die Statusmeldung in der App und/oder mit dem zweiten Gerät angezeigt und/oder dem Benutzer mitgeteilt werden kann.

In einigen Ausführungsformen kann vorgesehen sein, dass eine Statusanfrage von der Registrierungsstelle an das erste Gerät übermittelt werden kann, und dass in Reaktion auf die Statusanfrage das erste Gerät das Status-Audiosignal aussenden kann.

Das Erzeugen der Zeichenfolge kann mit dem ersten Gerät durch ein Betätigen eines Betätigungselements des ersten Geräts initiiert werden. Das Erzeugen der Zeichenfolge kann nach einem Betätigen eines oder des Betätigungselements des ersten Geräts erfolgen. Alternativ oder zusätzlich kann das Aussenden des Audiosignals durch ein Betätigen eines Betätigungselements des ersten Geräts initiiert werden. Das Aussenden des Audiosignals kann nach einem Betätigen eines oder des Betätigungselements des ersten Geräts erfolgen. In einigen Ausführungsformen kann auch vorgesehen sein, dass das Verfahren mit oder nach dem Betätigen des Betätigungselements initiiert und/oder gestartet wird.

Ein zweiter Aspekt der Erfindung betrifft ein Gebäudeautomationssystem, umfassend ein erstes Gerät und ein zweites Gerät sowie eine Registrierungsstelle, wobei das erste Gerät und das zweite Gerät dazu eingerichtet sind, über die Registrierungsstelle miteinander zu kommunizieren, wobei das erste Gerät und das zweite Gerät nach einem erfindungsgemäßen Verfahren zugeordnet sind.

Das erste Gerät kann ein Türkommunikationsgerät sein oder aufweisen. In einigen Ausführungsformen kann das erste Gerät eine Wohnungsstation eines Türkommunikationssystems sein oder aufweisen. Das zweite Gerät kann ein mobiles Gerät sein oder aufweisen. In einigen Ausführungsformen kann das zweite Gerät ein Smartphone sein oder aufweisen.

Die Registrierungsstelle kann cloud-basiert sein. Alternativ oder zusätzlich kann die Registrierungsstelle drahtlos mit dem ersten Gerät und dem zweiten Gerät verbunden sein. Alternativ oder zusätzlich kann das erste Gerät und/oder das zweite Gerät mit der Registrierungsstelle kabelgebunden oder mit einem Kabel verbunden sein. Es kann vorgesehen sein, dass das erste Gerät und/oder das zweite Gerät mit der Registrierungsstelle über LAN und/oder WAN verbunden sein kann.

Das erste Gerät kann ein Betätigungselement aufweisen. Das Betätigungselement kann in einigen Ausführungsformen ein Knopf, Taster oder Schalter sein oder aufweisen. Das erste Gerät kann dazu eingerichtet sein, nach Betätigen des Betätigungselements die Zeichenfolge zu erzeugen. Das erste Gerät kann dazu eingerichtet sein, nach Betätigen des Betätigungselements das Audiosignal auszugeben.

Die Erfindung wird anhand der nachfolgenden Figuren weiter erläutert. Es zeigen:
- Fig. 1:: ein beispielhaftes Ausführungsbeispiel eines erfindungsgemäßen Verfahrens;
- Fig. 2:: ein beispielhaftes Ausführungsbeispiel einer erfindungsgemäßen Gebäudeautomationssystem;
- Fig. 3a:: ein beispielhaftes Spektrum; und
- Fig. 3b:: eine beispielhafte codierte Zeichenfolge und ein entsprechendes Audiosignal.

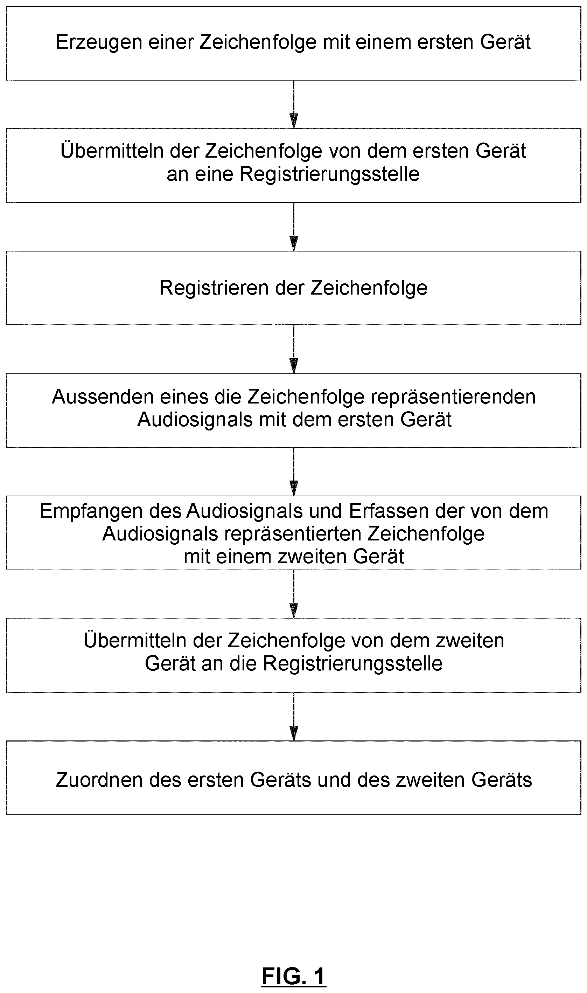

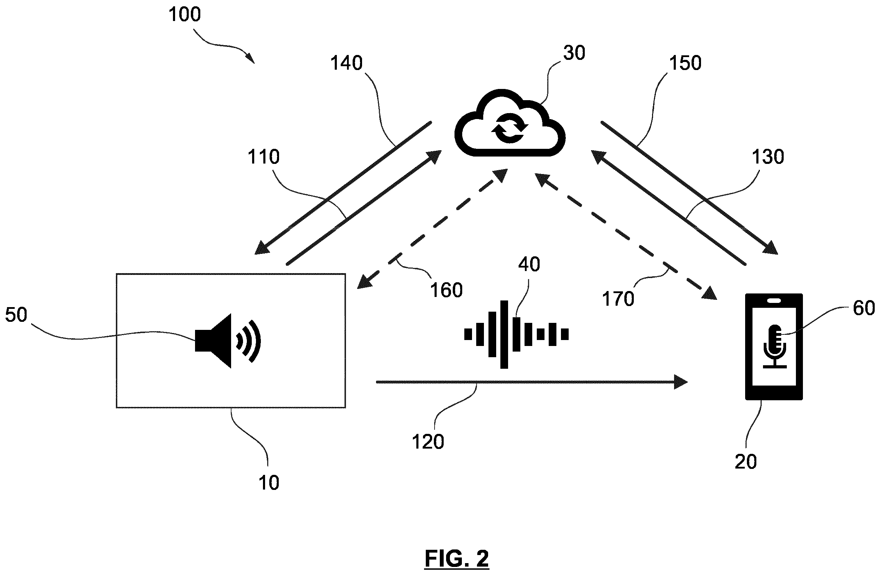

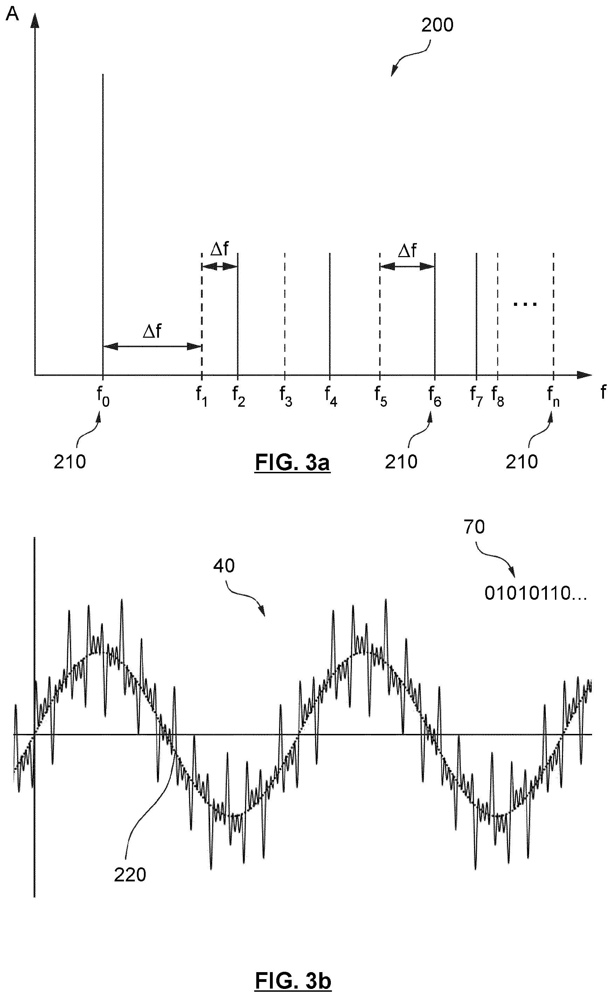

Figur 1 zeigt einen beispielhaften Ablauf eines Ausführungsbeispiels eines erfindungsgemäßen Verfahrens. Das Verfahren kann zwei Geräte 10, 20 eines Gebäudeautomationssystems 100, insbesondere ein erstes Gerät 10 und ein zweites Gerät 20, miteinander koppeln. Ein beispielhaftes Ausführungsbeispiel eines erfindungsgemäßen Gebäudeautomationssystems 100 ist in Figur 2 gezeigt. Figur 3a zeigt ein beispielhaftes Spektrum, und Figur 3b eine beispielhafte codierte Zeichenfolge 70 und ein entsprechendes beispielhaftes Audiosignal 40.

Es kann vorgesehen sein, dass mindestens einer, mehrere oder alle Schritte eines erfindungsgemäßen Verfahrens computer-implementiert sein können.

Es kann vorgesehen sein, dass durch das Verfahren das erste Gerät 10 einem Benutzerkonto zugeordnet sein oder werden soll, dem bereits das zweite Gerät 20 zugeordnet ist.

Es kann eine Zeichenfolge 70 von dem ersten Gerät 10 erzeugt sein oder werden. Es kann vorgesehen sein, dass die Zeichenfolge 70 dynamisch von dem ersten Gerät 10 erstellt sein oder werden kann. Die Zeichenfolge 70 kann bei einer mehrfachen Zuordnung des ersten Geräts 10, z.B. zu verschiedenen zweiten Geräten 20 und/oder verschiedenen Benutzerkonten, bei mindestens zwei, mehreren oder allen jeweiligen Zuordnungen jeweils verschieden sein.

Alternativ oder zusätzlich kann vorgesehen sein, dass die Zeichenfolge 70 bereits in dem ersten Gerät 10 hinterlegt sein kann. Beispielsweise kann die Zeichenfolge 70 bei der Herstellung des ersten Geräts 10 erzeugt sein oder werden, und in dem ersten Gerät 10 gespeichert sein.

Die Zeichenfolge 70 kann in einigen Ausführungsformen das erste Gerät 10 eindeutig identifizieren. Es kann vorgesehen sein, dass die Zeichenfolge 70 aus mindestens einem oder mehreren Teilen bestehen, und/oder einen oder mehrere Teile umfassen kann. Ein Teil der Zeichenfolge kann beispielsweise eine eindeutige Kennnummer des ersten Geräts 10 sein oder aufweisen.

Es kann die Zeichenfolge 70, und/oder zumindest ein Teil der Zeichenfolge 70, eines oder mehrere aus Typbezeichnung, Typnummer, Chargennummer oder Herstellungsdatum des ersten Geräts 10 umfassen. In einigen Ausführungsformen kann die Zeichenfolge 70, und/oder zumindest ein Teil der Zeichenfolge 70, eine Versionsnummer einer Firmware des ersten Geräts umfassen. Alternativ oder zusätzlich kann die Zeichenfolge 70, und/oder zumindest ein Teil der Zeichenfolge 70, einen Zeitstempel, ein aktuelles Datum und/oder eine aktuelle Uhrzeit umfassen. Das aktuelle Datum kann beispielsweise das Datum sein, an dem die Zeichenfolge 70 erstellt ist oder wird. Die aktuelle Uhrzeit kann beispielsweise die Uhrzeit sein, zu der die Zeichenfolge 70 erstellt ist oder wird. Alternativ oder zusätzlich kann die Zeichenfolge 70, oder zumindest Teile der Zeichenfolge 70, in einigen Ausführungsformen zufällig erzeugt sein oder werden.

Die Zeichenfolge 70 kann ein oder mehrere Zeichen umfassen. Es kann vorgesehen sein, dass die Zeichenfolge 70 alphanumerisch ist, und/oder mindestens ein Zeichen alphanumerisch ist. Alternativ oder zusätzlich kann die Zeichenfolge 70 binär sein, und/oder ein oder mehrere Bits umfassen. In einigen Ausführungsformen kann die Zeichenfolge 70 nach der Erzeugung codiert sein oder werden, beispielsweise mit ASCII, UTF-8, einer Binärkodierung oder einer anderen geeigneten Codierung. Die Zeichenfolge 70 kann eine codierte Zeichenfolge 70 sein.

Es kann vorgesehen sein, dass das Verfahren durch einen oder den Benutzer initiiert werden kann. Beispielsweise kann das erste Gerät 10 ein Betätigungselement aufweisen. Nach Betätigen des Betätigungselements durch den Benutzer kann das Verfahren zum Zuordnen des ersten Geräts 10 beginnen, und/oder kann einer oder der erste Schritt des Verfahrens durchgeführt werden. Das Betätigungselement kann beispielsweise eine Taste, ein Schalter, ein Knopf, ein Taster, ein Schieber oder dergleichen sein oder aufweisen. Das Betätigungselement kann an einer Außenseite des ersten Geräts 10 angeordnet sein.

Die Zeichenfolge 70 wird von dem ersten Gerät 10 an eine Registrierungsstelle 30 übermittelt, wie beispielsweise in Fig. 2 mit Bezugszeichen 110 angedeutet. Das erste Gerät 10 kann dazu mit der Registrierungsstelle 30 zum Datenaustausch verbunden sein. Das erste Gerät 10 kann mit der Registrierungsstelle 30 drahtlos verbunden sein. Die drahtlose Verbindung kann in einigen Ausführungsformen beispielsweise narrowband-IOT, eine Internetverbindung, WiFi, ein Telefonnetzwerk oder eine andere geeignete Verbindung sein. Die Registrierungsstelle 30 kann ein Server sein. Beispielsweise kann die Registrierungsstelle 30 cloudbasiert sein. Alternativ oder zusätzlich kann das erste Gerät 10 mit der Registrierungsstelle 30 kabelgebunden oder mit einem Kabel verbunden sein, beispielsweise über Ethernet, in einem LAN oder dergleichen. Es kann vorgesehen sein, dass das erste Gerät 10 mit der Registrierungsstelle 30 über LAN und/oder WAN verbunden sein kann.

Das erste Gerät 10 kann ein Mittel aufweisen, um die Zeichenfolge zu erstellen und/oder zu codieren, und/oder um die entsprechenden Frequenzen, Amplituden und/oder Phasen des die Zeichenfolge repräsentierenden Audiosignals 40 zu bestimmen. Das erste Gerät 10 kann beispielsweise eine Computereinheit, einen integrierten Schaltkreis, ein FPGA, einen Mikrocontroller oder dergleichen aufweisen.

Die Registrierungsstelle 30 kann die Zeichenfolge 70 von dem ersten Gerät 10 empfangen. Die Registrierungsstelle 30 registriert die Zeichenfolge 70. Beispielsweise kann die Registrierungsstelle 30 die Zeichenfolge 70 in einem Speicher und/oder einer Datenbank hinterlegen.

Die Registrierungsstelle 30 kann dazu eingerichtet sein, Geräte 10, 20 eines oder mehrerer Gebäudeautomationssystem 100 zu verwalten. Beispielsweise können einem Benutzerkonto ein oder mehrere Geräte eines Gebäudeautomationssystems 100 zugeordnet sein. Einstellungen und/oder Konfigurationen der von der Registrierungsstelle 30 verwalteten Geräte, z.B. Benutzerkonten zugeordnete Geräte, können in der Registrierungsstelle 30 hinterlegt sein. Die Registrierungsstelle 30 kann eine Projektion und/oder Konfiguration des Gebäudeautomationssystems 100 verwalten und/oder ändern, und/oder eine Projektion und/oder Konfiguration des Gebäudeautomationssystems 100 kann in der Registrierungsstelle 30 hinterlegt sein. Es kann vorgesehen sein, dass ein Benutzer auf die in der Registrierungsstelle hinterlegten Parameter, Konfiguration und dergleichen der seinem Benutzerkonto zugeordneten und Geräte zugreifen kann.

Die Registrierungsstelle 30 kann dazu dienen, eine Kommunikation zwischen mit der Registrierungsstelle 30 zum Datenaustausch verbundenen Geräten zu ermöglichen. Beispielsweise kann die Registrierungsstelle 30 Daten von einem Gerät zu einem anderen Gerät weiterleiten. Es kann vorgesehen sein, dass ein Gerät über die Registrierungsstelle 30 auf ein anderes mit der Registrierungsstelle 30 verbundenes Gerät zugreifen, dieses verwalten, konfigurieren oder dergleichen kann. Es kann vorgesehen sein, dass Benutzer über die Registrierungsstelle 30 auf ein anderes mit der Registrierungsstelle 30 verbundenes Gerät, das dem Benutzerkonto des Benutzers zugeordnet sein kann, zugreifen, dieses verwalten, konfigurieren oder dergleichen kann.

Es kann vorgesehen sein, dass die Registrierungsstelle 30 nach dem Empfangen der Zeichenfolge 70 und/oder nach dem Registrieren der Zeichenfolge 70 eine Empfangsbestätigung und/oder Quittung an das erste Gerät 10 übermitteln kann.

Das erste Gerät 10 kann ein die Zeichenfolge 70 repräsentierendes Audiosignal 40 aussenden, wie beispielsweise in Figur 2 mit Bezugszeichen 120 angedeutet. Das Audiosignal 40 kann ein akustisches Signal sein oder aufweisen. Das Audiosignal 40 kann ein Spektrum haben, und/oder durch ein Spektrum 200 repräsentiert sein. Das Audiosignal 40 kann ein Schallsignal sein. Das Audiosignal 40 kann einen Ton oder mehrere Töne umfassen. Ein Ton kann eine Sinus- und/oder Cosinuswelle sein oder aufweisen, deren Frequenz eine Frequenz im Spektrums sein kann. Es kann vorgesehen sein, dass eine, mehrere oder alle Frequenzen des Spektrums und/oder des Audiosignals 40 derart gewählt sind, dass sie für ein menschliches Ohr nicht hörbar sein können. In einigen Ausführungsformen kann eine, mehrere oder alle Frequenzen des Spektrums und/oder des Audiosignals größer als z.B. 18 kHz, größer als z.B. 20 kHz, und/oder größer als z.B. 22 kHz sein. Alternativ oder zusätzlich kann eine, mehrere oder alle Frequenzen des Spektrums und/oder des Audiosignals 40 derart gewählt sein, dass sie für ein menschliches Ohr hörbar sein können. In einigen Ausführungsformen kann eine, mehrere oder alle Frequenzen des Spektrums und/oder des Audiosignals kleiner als z.B. 18 kHz, kleiner als z.B. 20 kHz, und/oder kleiner als z.B. 22 kHz sein. Es kann vorgesehen sein, dass eine, eine, mehrere oder alle Frequenzen des Spektrums und/oder des Audiosignals 40 derart gewählt sein können, dass sie von einem Lautsprecher eines Smartphones abgegeben, und/oder von einem Mikrophon eines Smartphones erfasst werden können. Der Lautsprecher kann in einigen Ausführungsformen ein low-budget Lautsprecher sein oder aufweisen. Das Mikrophon kann in einigen Ausführungsformen ein low-budget Mikrophon sein oder aufweisen.

Es kann das Audiosignal ein Spektrum 200 haben, das auf der Zeichenfolge 70, und/oder der codierten Zeichenfolge 70, basieren und/oder diesen entsprechen kann. Eine Frequenz f einer Welle des Audiosignals und/oder im Spektrums 200 kann eindeutig einem Zeichen oder einem Teil der Zeichenfolge 70 und/oder der codierten Zeichenfolge 70, beispielsweise einem Bit, zugeordnet sein. Beim Aussenden des Audiosignals 40 kann das Audiosignal 40 entsprechend dem Spektrum 200 erzeugt sein oder werden.

Das Audiosignal 40 kann eine Überlagerung von Wellen, z.B. Sinus- und/oder Cosinuswellen aufweisen oder sein. Die jeweiligen Wellen können der Zeichenfolge 70 entsprechende und/oder die Zeichenfolge 70 repräsentierende Frequenzen, Amplituden und/oder Phasen haben. Damit kann die Zeichenfolge 70 in und/oder durch das Audiosignal 40 repräsentiert sein, und/oder das Audiosignal 40 der Zeichenfolge 70 entsprechen.

Es kann vorgesehen sein, dass das Audiosignal 40 moduliert sein oder werden kann. Es kann vorgesehen sein, dass d das Audiosignal 40 mit einer Frequenz größer 18 kHz moduliert werden kann. Es kann vorgesehen sein, dass das Audiosignal 40 mit einer Frequenz größer 20 kHz moduliert werden kann. Beispielsweise kann eine Trägerwelle 210 vorgesehen sein, mit der das Audiosignal 40 moduliert sein oder werden kann. Die Trägerwelle 210 kann eine vorgegebene Frequenz und/oder Amplitude haben. Die Frequenz der Trägerwelle kann eine Frequenz größer 18 kHz, oder größer 20 kHz, haben. In einigen Ausführungsformen kann die Trägerwelle 210 genau eine Frequenz haben. In einigen anderen Ausführungsformen kann die Trägerwelle 210 mehrere Frequenzen haben. Es kann vorgesehen sein, dass bei oder nach dem Modulieren des Audiosignals 40 ein Spektrum 200 des Audiosignals 40 die der Trägerwelle 210 entsprechende Frequenz oder Frequenzen aufweisen kann.

Es kann das Audiosignal 40 ausgesendet werden, bevor die Zeichenfolge an die Registrierungsstelle 30 übermittelt wird. In einigen Ausführungsformen kann die Zeichenfolge an die Registrierungsstelle 30 übermittelt werden, bevor das Audiosignal 40 ausgesendet wird.

Es kann das Audiosignal 40 von dem ersten Gerät 10 wiederholt und/oder periodisch ausgesendet werden. Es kann vorgesehen sein, dass das erster Gerät 10 das Audiosignal 40 selbstständig und/oder automatisch nach oder bei Beginn des Verfahrens aussenden kann. Alternativ oder zusätzlich kann vorgesehen sein, dass das Aussenden des Audiosignal 40 ausgelöst oder getriggert wird, beispielsweise durch einen oder den Benutzer, die Registrierungsstelle 30 und/oder das erste Gerät 10.

Es kann die Registrierungsstelle 30, wenn oder nachdem sie die Zeichenfolge 70 von dem ersten Gerät 10 empfangen hat, eine Aufforderung an das erste Gerät 10 übermitteln, das Audiosignal 40 auszusenden. Es kann vorgesehen sein, dass die Aufforderung beispielsweise das erste Gerät 10 anweisen kann, das Audiosignal 40 einmal, oder wiederholt und/oder periodisch, auszusenden. Nach Erhalt der Aufforderung kann das erste Gerät 10 in einigen Ausführungsformen das Audiosignal aussenden.

Alternativ oder zusätzlich kann vorgesehen sein, dass das erste Gerät 10 das Audiosignal 40 nach Erhalt der Empfangsbestätigung und/oder Quittung von der Registrierungsstelle 30 aussenden kann, beispielsweise als Reaktion auf den Erhalt der Empfangsbestätigung und/oder Quittung.

Alternativ oder zusätzlich kann vorgesehen sein, dass das Aussenden des Audiosignals 40 durch den Benutzer ausgelöst werden kann. In einigen Ausführungsformen kann das Aussenden nach einem Betätigen des Betätigungselements erfolgen. Beispielsweise kann in einigen Ausführungsformen nach einem Betätigen des Betätigungselements das Verfahren initiiert werden, und nach dem Erzeugen der Zeichenfolge durch das erste Gerät 10, und/oder nach dem Übermitteln der Zeichenfolge von dem ersten Gerät 10 an die Registrierungsstelle 30 das Audiosignal 40 ausgesendet werden. In einigen Ausführungsformen kann zum Initiieren des Verfahrens und zum Aussenden des Audiosignals 40 ein einmaliges Betätigen des Betätigungselements genügen. Alternativ kann vorgesehen sein, dass mit oder nach einem ersten Betätigen des Betätigungselements das Verfahren initiiert werden kann, und mit oder nach einem weiteren Betätigen des Betätigungselements das Audiosignal 40 ausgesendet werden kann.

Das Audiosignal 40 kann von dem zweiten Gerät 20 empfangen werden. Das zweite Gerät 20 kann die in dem Audiosignal 40 enthaltenen Zeichenfolge erfassen. Das zweite Gerät 20 kann ein Mittel aufweisen, um das Audiosignal 40 zu erfassen. Beispielsweise kann das zweite Gerät 20 ein Mikrophon haben. Das zweite Gerät 20 kann ein Display haben.

Es kann vorgesehen sein, dass das zweite Gerät 20 das empfangene Audiosignal 40 demodulieren kann.

Bei oder nach der Modulation und/oder Demodulation kann eine Fehlerkorrektur vorgesehen sein. Beispielsweise kann ein fehlerkorrigierender Algorithmus eingesetzt sein oder werden. Die Fehlerkorrektur kann eine Vorwärtsfehlerkorrektur umfassen. Die Fehlerkorrektur kann beispielsweise durch oder mit einem Reed-Solomon-Code durchgeführt sein oder werden, und/oder einen Reed-Solomon-Code umfassen oder verwenden. Die Fehlerkorrektur kann einen Prüfcode oder dergleichen umfassen oder verwenden, und/oder mit einem Prüfcode durchgeführt sein. Die Fehlerkorrektur kann eine zyklische Redundanzprüfung oder dergleichen umfassen.

Das zweite Gerät 20 kann die in dem Audiosignal 40 enthaltene und/oder von dem Audiosignal repräsentierte Zeichenfolge 70 erfassen. Beispielsweise kann das zweite Gerät 20 eine Spektralanalyse und/oder Frequenzanalyse durchführen, um die Frequenzen des Audiosignals 40 zu bestimmen. Basierend auf den bestimmten Frequenzen und/oder der Frequenzanalyse kann anschließend die Zeichenfolge 70, und/oder die Zeichen und/oder Teile der Zeichenfolge 70, durch das zweite Gerät 20 bestimmt sein oder werden.

Das zweite Gerät 20 kann ein Mittel aufweisen, um die Zeichenfolge zu erfassen, beispielsweise eine Computereinheit, einen integrierten Schaltkreis, ein FPGA, einen Mikrocontroller oder dergleichen.

Es kann vorgesehen sein, dass die Zeichenfolge 70 durch das zweite Gerät 20 decodiert sein oder werden kann.

Es kann vorgesehen sein, dass das zweite Gerät 20 einem oder dem Benutzer die Zeichenfolge 70, und/oder mit oder aus der Zeichenfolge 70 extrahierte Daten, beispielsweise Metadaten, Kennung, Typ, Typnummer und/oder Art des ersten Geräts 10 anzeigen kann. In einigen Ausführungsformen kann vorgesehen sein, dass eine oder die App und/oder Programm dem Benutzer die Zeichenfolge 70 und/oder die entsprechenden Daten anzeigen kann.

Das zweite Gerät 20 kann die Zeichenfolge 70 an die Registrierungsstelle 30 übermitteln. Das zweite Gerät 20 kann dazu mit der Registrierungsstelle 30 zum Datenaustausch verbunden sein. Beispielsweise kann das zweite Gerät 20 mit der Registrierungsstelle 30 über drahtlos verbunden sein. In einigen Ausführungsformen kann das zweite Gerät 20 über narrowband-IOT, Internet, WiFi, ein Telefonnetzwerk, oder ein anderes geeignetes Netzwerk mit der Registrierungsstelle 30 verbunden sein. Alternativ oder zusätzlich kann das zweite Gerät 20 mit der Registrierungsstelle 30 kabelgebunden oder mit einem Kabel verbunden sein, beispielsweise über Ethernet, in einem LAN oder dergleichen. Es kann vorgesehen sein, dass das zweite Gerät 20 mit der Registrierungsstelle 30 über LAN und/oder WAN verbunden sein kann.

Es kann vorgesehen sein, dass vor dem Übermitteln der Zeichenfolge 70 von dem zweiten Gerät 20 an die Registrierungsstelle 30 die Übermittlung bestätigt und/oder freigegeben sein oder werden muss, beispielsweise von dem Benutzer. Es kann vorgesehen sein, dass eine entsprechende Bestätigung über die App und/oder das Programm erfolgen kann. In einigen Ausführungsformen kann die Zeichenfolge zusammen mit einer Anweisung, das erste Gerät 10 dem zweiten Gerät 20 und/oder einem Benutzerkonto zuzuordnen, von dem zweiten Gerät 20 an die Registrierungsstelle 30 übermittelt werden. Es kann vorgesehen sein, dass die Anweisung und die Zeichenfolge Teile einer Nachricht und/oder eines Datensatzes sind, der von dem zweiten Gerät 20 an die Registrierungsstelle 30 übermittelt sein oder werden kann.

Es kann vorgesehen sein, dass die Registrierungsstelle 30 eine Bestätigung und/oder Quittung nach dem Empfangen der Zeichenfolge 70 von dem zweiten Gerät 20 an das zweite Gerät 20 übermitteln kann.

Die Registrierungsstelle 30 kann die von dem zweiten Gerät 20 empfangene Zeichenfolge 70 mit hinterlegten Zeichenfolgen vergleichen. Bei einer Übereinstimmung kann die Registrierungsstelle 30 das erste Gerät 10 und das zweite Gerät 20 einander zuordnen.

Es kann beim Übermitteln der Zeichenfolge 70 von dem zweiten Gerät 20 an die Registrierungsstelle 30 eine eindeutige Kennung des zweiten Geräts 20 von dem zweiten Gerät 20 an die Registrierungsstelle 30 übermittelt werden, um das erste Gerät 10 dem zweiten Gerät 20 zuzuordnen. In einigen Ausführungsformen kann das erste Gerät 10 einem, mehreren oder allen Benutzerkonten zugeordnet werden, denen das zweite Gerät 20 zugeordnet ist. In einigen Ausführungsformen kann alternativ oder zusätzlich beim Übermitteln der Zeichenfolge 70 von dem zweiten Gerät 20 an die Registrierungsstelle 30 eine eindeutige Kennung des Benutzerkontos von dem zweiten Gerät 20 an die Registrierungsstelle 30 übermittelt werden, um das erste Gerät 10 dem Benutzerkonto zuzuordnen.

Die eindeutige Kennung des zweiten Geräts 20 kann das zweite Gerät 20 eindeutig identifizieren. Die eindeutige Kennung des zweiten Geräts 20 kann alphanumerisch sein. Die eindeutige Kennung Benutzerkontos kann das Benutzerkonto eindeutig identifizieren. Die eindeutige Kennung des zweiten Geräts 20 kann alphanumerisch sein.

Die Registrierungsstelle 30 kann das erste Gerät 10 und das zweite Gerät 20 zuordnen. Eine Zuordnung kann dabei umfassen, dass das erste Gerät 10 einem oder dem Benutzerkonto, dem das zweite Gerät 20 zugeordnet ist, zugeordnet wird. Alternativ oder zusätzlich kann vorgesehen sein, das erste Gerät 10 dem Benutzerkonto und/oder dem zweiten Gerät 20, von dem die Anweisung zum Zuordnen an die Registrierungsstelle 30 übermittelt worden ist, zugeordnet werden kann.

Es kann vorgesehen sein, dass nach dem Zuordnen ein Benutzer und/oder das Benutzerkonto auf das erste Gerät 10 zugreifen kann, beispielsweise um Parameter und/oder eine Konfiguration des ersten Geräts 10 anzupassen und/oder zu ändern. In einigen Ausführungsformen können die entsprechenden Parameter und/oder Konfigurationen auf einem Server, z.B. der Registrierungsstelle 30, hinterlegt sein, und der Benutzer und/oder das Benutzerkonto Zugriff haben, wenn das erste Gerät 10 zugeordnet ist.

Es kann die Registrierungsstelle 30 nach dem Zuordnen eine Zuordnungsbestätigung an das erste Gerät 10 und/oder das zweite Gerät 20 übermitteln, wie beispielhaft in Figur 2 mit den Bezugszeichen 140 bzw. 150 angedeutet.

Es kann vorgesehen sein, dass das zweite Gerät 20 die Zuordnungsbestätigung und/oder eine entsprechende Mitteilung anzeigen kann, beispielsweise auf einem Display oder in der App, so dass der Benutzer eine Rückmeldung über ein erfolgreiches Zuordnen erhalten kann.

Es kann vorgesehen sein, dass nach dem Zuordnen das erste Gerät 10 und das zweite Gerät 20 miteinander kommunizieren und/oder Daten austauschen können. In einigen Ausführungsformen kann die Registrierungsstelle 30 dabei als Relay dienen, und/oder die Kommunikation zwischen dem ersten Gerät 10 und dem zweiten Gerät 20 über die Registrierungsstelle 30 erfolgen, wie beispielhaft in Figur 2 mit Bezugszeichen 160 und 170 angedeutet. Beispielsweise kann vorgesehen sein, dass das erste Gerät 10 eine oder mehrere Nachrichten, Daten und/oder Mitteilungen an die Registrierungsstelle 30 übermitteln kann, und die Registrierungsstelle 30 die von dem ersten Gerät 10 empfangenen Nachrichten, Daten und/oder Mitteilungen an das zweite Gerät 20 weiterleiten kann. Alternativ oder zusätzlich kann vorgesehen sein, dass das zweite Gerät 20 eine oder mehrere Nachrichten, Daten und/oder Mitteilung an die Registrierungsstelle 30 übermitteln kann, und die Registrierungsstelle 30 die von dem zweiten Gerät 20 empfangene Nachrichten, Daten und/oder Mitteilung an das erste Gerät 10 weiterleiten kann.

Es kann vorgesehen sein, dass nach dem Zuordnen und/oder nach dem Empfangen der Zuordnungsbestätigung das erste Gerät 10 ein Zuordnungs-Audiosignal ausgeben kann, das eine Zuordnungs-Zeichenfolge umfassen und/oder repräsentieren kann. Das Zuordnungs-Audiosignal kann von dem zweiten Gerät 20 empfangen werden, und die die Zuordnungs-Zeichenfolge von dem zweiten Gerät 20 erfasst werden. Die Zuordnungs-Zeichenfolge kann eine Bestätigung sein, dass das erste Gerät 10 zugeordnet worden ist, und/oder die Zuordnung dem ersten Gerät 10 bekannt ist. Es kann vorgesehen sein, dass das zweite Gerät 20 die Zuordnungs-Zeichenfolge und/oder eine entsprechende Mitteilung anzeigen kann, beispielsweise auf einem Display oder in der App, so dass der Benutzer eine Rückmeldung über ein erfolgreiches Zuordnen erhalten kann.

Das Aussenden des Zuordnungs-Audiosignals kann wie für das Aussenden des Audiosignals Zeichenfolge beschrieben erfolgen. Das Zuordnungs-Audiosignal kann eines oder mehrere Merkmale des Audiosignals aufweisen. Das Erfassen der Zuordnungs-Zeichenfolge kann wie für das Erfassen der Zeichenfolge 70 beschrieben erfolgen.

Es kann vorgesehen sein, dass nach dem Zuordnen das erste Gerät 10 ein Status-Audiosignal ausgeben kann, das eine Statusmeldung und/oder Status-Zeichenfolge umfassen und/oder repräsentieren kann. Das Status-Audiosignal kann von dem zweiten Gerät 20 empfangen werden, und die Statusmeldung und/oder die Status-Zeichenfolge von dem zweiten Gerät 20 erfasst werden. Die Statusmeldung und/oder Status-Zeichenfolge kann einen Zustand und/oder Status des ersten Geräts umfassen, beschreiben und/oder enthalten. Die Statusmeldung und/oder Status-Zeichenfolge kann in einigen Ausführungsformen eine Fehlermeldung umfassen. Es kann vorgesehen sein, dass das zweite Gerät 20 die Statusmeldung, Status-Zeichenfolge und/oder eine entsprechende Mitteilung anzeigen kann, beispielsweise auf einem Display oder in der App, so dass der Benutzer eine Rückmeldung über den Zustand und/oder Status des ersten Geräts 10 erhalten kann.

Das Aussenden des Status-Audiosignal kann wie für das Aussenden des Audiosignals 40 beschrieben erfolgen. Das Status-Audiosignal kann eines oder mehrere Merkmale des Audiosignals 40 aufweisen. Das Erfassen der Statusmeldung und/oder der Status-Zeichenfolge kann wie für das Erfassen der Zeichenfolge 70 beschrieben erfolgen.

Es kann vorgesehen sein, dass eine Statusanfrage von der Registrierungsstelle 30 an das erste Gerät 10 übermittelt werden kann, und dass in Reaktion auf die Statusanfrage das erste Gerät 10 das Status-Audiosignal aussenden kann.

Ein Ausführungsbeispiel eines erfindungsgemäßen Gebäudeautomationssystem 100 ist in Figur 2 gezeigt. Das Gebäudeautomationssystem umfasst ein erstes Gerät 10, ein zweites Gerät 20 und eine Registrierungsstelle 30, wobei das erste Gerät 10 und das zweite Gerät 20 durch ein erfindungsgemäßes Verfahren zugeordnet sind. Das erste Gerät 10 kann mit der Registrierungsstelle 30 zum Datenaustausch verbunden sein. Das zweite Gerät 20 kann mit der Registrierungsstelle 30 zum Datenaustausch verbunden sein.

Das erste Gerät 10 kann ein Mittel zum Aussenden eines Audiosignals 40 aufweisen, beispielsweise einen Lautsprecher 50. Das zweite Gerät 20 kann ein Mittel zum Empfangen eines Audiosignals 40 aufweisen, beispielsweise ein Mikrofon 60.

Das erste Gerät 10 und/oder das zweite Gerät 20 kann eine Abtastrate und/oder Abtastfrequenz haben, die größer oder gleich das doppelte der größten Frequenz des Audiosignals 40 sein kann. Die Abtastrate und/oder Abtastfrequenz des ersten Geräts 10 und/oder des zweiten Geräts 20 kann derart gewählt sein, dass das Spektrum 200 ohne Aliasing erstellt, und/oder eine Spektralanalyse und/oder Frequenzanalyse des Audiosignals 40 ohne Aliasing durchgeführt werden kann.

Das erste Gerät 10 kann ein Türkommunikationsgerät sein oder aufweisen. In einigen Ausführungsformen kann das erste Gerät 10 eine Wohnungsstation eines Türkommunikationssystems sein oder aufweisen. Das erste Gerät 10 kann alternativ oder zusätzlich ein (UP-)Radio, ein Bildschirm oder ein sonstiges Gebäudeautomationssystem sein oder aufweisen. Das erste Gerät 10 kann eine Kamera, ein Mikrophon, eine Sprechanlage, ein Sensor, eine Außenstation, eine Innenstation, eine Klingel und/oder ein Türöffner sein oder aufweisen.

Das Türkommunikationsgerät kann Teil eines smart homes oder eines Gebäudeautomationssystems sein. Ein smart home oder ein Gebäudeautomationssystem kann das Türkommunikationsgerät aufweisen. Das Türkommunikationsgerät kann mit einem Gerät des smart homes oder des Gebäudeautomationssystems verbunden sein oder Daten austauschen.

Das zweite Gerät 20 kann ein mobiles Gerät sein oder aufweisen. Beispielsweise kann das zweite Gerät 20 ein Smartphone, ein Laptop, ein Tablet oder dergleichen sein oder aufweisen.

Das erste Gerät 10 kann ein Betätigungselement haben. Das erste Gerät 10 und/oder das Betätigungselement kann dazu eingerichtet sein, nach einem Betätigen des Betätigungselements ein erfindungsgemäßes Verfahren zu initiieren, auszuführen und/oder zu starten. Beispielsweise kann ein Benutzer das Betätigungselement betätigen, um das erste Gerät 10 einem zweiten Gerät 20 und/oder einem Benutzerkonto zuzuordnen.

Es kann vorgesehen sein, dass auf dem zweiten Gerät 20 eine App oder ein Programm laufen kann. Die App kann dazu dienen, einen Zugriff auf ein Benutzerkonto zu ermöglichen. Beispielsweise kann ein Benutzer mit dem zweiten Gerät 20, und/oder der App oder dem Programm, die dem Benutzerkonto zugeordneten Geräte steuern, verwalten, konfigurieren oder dergleichen.

Figur 3a zeigt ein beispielhaftes Spektrum 200 eines Audiosignals 40. Figur 3b zeigt eine beispielshafte Zeichenfolge 70, und ein beispielhaftes Audiosignal 40. Die Zeichenfolge 70 kann codiert sein.

Wie in Figur 3a beispielhaft dargestellt kann das Spektrum 200 eine Vielzahl Frequenzen f umfassen. Die Zeichenfolge 70 und/oder das Audiosignal 40 kann dabei durch die Frequenzen f im Spektrum 200 repräsentiert sein. In einigen Ausführungsformen kann die Zeichenfolge 70 binär sein, und/oder entsprechend binär codiert. Jedem Zeichen der Zeichenfolge 70 kann eine bestimmte Frequenz f im Spektrum 200 zugeordnet sein, so dass sich für verschiedene Zeichenfolgen 70 verschiedene Spektren 200 ergeben können.

Beispielsweise kann die Zeichenfolge Binärzeichen wie "0" und "1" umfassen. Die Zeichenfolge kann beispielsweise n Stellen mit einem jeweiligen Zeichen an der jeweiligen Stelle umfassen. Eine Leerstelle kann in einigen Ausführungsformen ein Zeichen sein, und/oder als Zeichen interpretiert sein oder werden. In einer Ausführungsform kann jeder bestimmten Stelle der Zeichenfolge eine Frequenz zugeordnet sein, beispielsweise der ersten Stelle eine Frequenz f1, einer zweiten Stelle eine Frequenz f2, und so weiter, d.h. der i-ten Stelle eine i-te Freqzuenz fi. Bei der beispielhaft in Figur 3b dargestellten Zeichenfolge "01010110...0" kann ein Zeichen an der ersten Stelle eine "0" sein, an der zweiten Stelle eine "1" sein, an der dritten Stelle eine "0" sein, an der vierten Stelle eine "1" sein, an der fünften Stelle eine "0" sein, an der sechsten Stelle eine "1" sein, an der siebten Stelle eine "1" sein, an der achten Stelle eine "0" sein, ..., an der n-ten Stelle eine "0" sein.

Es kann, wenn die i-te Stelle eine "0" ist, die Amplitude der jeweiligen Frequenz fi null sein, wie in Fig. 3a mit den gestrichelten vertikalen Linien angedeutet. In einigen Ausführungsformen kann, wenn die i-te Stelle eine "1" ist, die Amplitude der jeweiligen Frequenz fi von null verschieden sein, wie in Fig. 3a mit den durchgezogenen vertikalen Linien angedeutet. Das Spektrum in Figur 3a kann damit beispielsweise die Zeichenfolge "01010110...0" repräsentieren.

Es kann vorgesehen sein, dass das Audiosignal 40 mit einer Trägerwelle 210 moduliert sein oder werden kann. Beispielsweise kann die Trägerwelle 210 eine Frequenz f0 im Spektrum 200 haben.

Es kann die Frequenz einer, mehrerer oder aller i+1-ten Stelle größer als die Frequenz einer vorangegangenen i-ten Stelle sein, fi+1 > fi. Alternativ oder zusätzlich kann die Frequenz einer, mehrerer oder aller i+1-ten Stelle kleiner als die Frequenz einer vorangegangenen i-ten Stelle sein, fi+1 < fi.

Es muss aber nicht zwingend eine vorstehend beschriebene Zuordnung der Stellen der Zeichenfolge 70 und der Frequenzen vorliegen. In einigen Ausführungsformen kann vorgesehen sein, dass eine i-te Stelle einer c(i)-ten Frequenz fc(i) zugeordnet sein kann. Dabei kann c(i) eine Zuordnungsfunktion sein, die der i-ten Stelle die c(i)-te Frequenz zuordnen kann. Die Zuordnung kann beliebig gewählt werden, insbesondere auch nicht systematisch gewählt sein, solange eine eindeutige Zuordnung vorliegt und das erste Gerät 10 und das zweite Gerät 20 dieselbe Zuordnungsregel oder Zuordnungsmethode anwenden.

Es kann ein Frequenzabstand Δf zwischen zwei benachbarten Frequenzen für alle gewählten Frequenzen gleich sein. Alternativ kann vorgesehen sein, dass der Frequenzabstand Δf variabel gewählt sein oder werden kann, und/oder variabel sein kann. In einigen Ausführungsformen kann der Frequenzabstand Δf zweier benachbarter Frequenzen von dem Frequenzabstand Δf zweier anderen benachbarten Frequenzen unterschiedlich sein.

Es kann vorgesehen sein, dass die von null verschiedene Amplitude der jeweiligen Frequenzen gleich sein kann, insbesondere von dem Wert der Frequenz selbst unabhängig sein kann. Beispielsweise haben die Frequenzen f2, f4, f6 und f7 in Figur 3a dieselbe Amplitude. Alternativ kann vorgesehen sein, dass die Amplitude variabel gewählt sein oder werden kann, und/oder variabel sein kann. In einigen Ausführungsformen kann die Amplitude mindestens einer Frequenz von der Frequenz mindestens einer anderen Frequenz unterschiedlich sein. Es kann vorgesehen sein, dass die Frequenz f0 der Trägerwelle 210, sofern vorhanden, kleiner als die kleinste Frequenz der Zeichenfolge 70 sein kann. Es kann vorgesehen sein, dass die Amplitude der Trägerwelle 210, sofern vorhanden, größer als die größte Frequenz der Zeichenfolge 70 sein kann.

Es kann eine Frequenz ein Bit oder eine Binärzahl repräsentieren.

Es kann aber auch vorgesehen sein, dass eine bestimmte Frequenz ein bestimmtes alphanumerisches Zeichen repräsentiert, beispielsweise ob ein solches an einer bestimmten Stelle in der Zeichenfolge vorhanden ist oder nicht. In einigen Ausführungsformen kann beispielsweise die Amplitude einer bestimmten Frequenz von null verschieden sein, wenn an einer bestimmten Stelle der Zeichenfolge ein bestimmtes alphanumerisches Zeichen vorhanden ist. In einigen Ausführungsformen kann beispielsweise die Amplitude einer bestimmten Frequenz gleich null sein, wenn an einer bestimmten Stelle der Zeichenfolge ein bestimmtes alphanumerisches Zeichen nicht vorhanden ist. Es kann vorgesehen sein, dass einer Stelle eine der Anzahl verschiedener möglichen Zeichen entsprechende Anzahl Frequenzen zugeordnet sein kann, und nur diejenige Frequenz eine von null verschiedene Amplitude haben kann, die das an der entsprechenden Stelle tatsächlich vorhandene Zeichen repräsentiert.

Alternativ oder zusätzlich kann vorgesehen sein, dass die Amplitude einer eine Stelle der Zeichenfolge repräsentierenden Frequenz in Abhängigkeit des an der jeweiligen Stelle vorhandenen Zeichens variieren kann. Somit kann die Frequenz die Stelle in der Zeichenfolge, und die Amplitude die Art des Zeichens repräsentieren.

Anstelle von oder zusätzlich zu einer Variation der Frequenz und/oder Amplitude zur Unterscheidung verschiedener Stellen und oder Arten von Zeichen kann die Phase variiert sein oder werden, um verschiedene Stellen und oder Arten von Zeichen unterscheiden zu können und/oder zu repräsentieren. Dazu können geeignete Phasendiagramme und/oder Phasenspektren alternativ oder zusätzlich erstellt sein oder werden, und das Audiosignal und/oder die entsprechenden Sinus- und/oder Cosinuswellen des Audiosignals jeweils die dem Spektrum entsprechende Phasenverschiebung aufweisen.

Das in Figur 3a und 3b dargestellte Spektrum und/oder eine entsprechende Modulation kann lediglich beispielhaft sein, und ist nicht einschränkend. Es sind auch andere Modulationsverfahren, Modulationstechniken, Methoden oder Modulationen zur Durchführung des Verfahrens und/oder zur Modulation möglich. Beispielsweise kann alternativ oder zusätzlich eine Frequenzumtastung (frequence-shift keying) vorgsehen oder verwendet sein, oder durchgeführt werden.

Die in den Ansprüchen, der Beschreibung und/oder den Figuren offenbarten Merkmale können einzeln oder in beliebiger Kombination für die Verwirklichung der Erfindung wesentlich sein.

### Bezugszeichenliste

- 10: erstes Gerät
- 20: zweites Gerät
- 30: Registrierungsstelle
- 40: Audiosignal
- 50: Lautsprecher
- 60: Mikrophon
- 70: Zeichenfolge

- 100: Gebäudeautomationssystem

- 110: Übermittlung der ID
- 120: Aussenden des Audiosignals
- 130: Übermittlung der ID
- 140: Übermittlung der Zuordnungsbestätigung
- 150: Übermittlung der Zuordnungsbestätigung
- 160: Kommunikation
- 170: Kommunikation

- 200: Spektrum
- 210: Frequenz
- 220: Trägerwelle
- 230: Frequenzabstand

## Patentansprüche

1. Verfahren zur Kopplung zweier Geräte (10, 20) eines Gebäudeautomationssystems (100), wobei das Verfahren die Schritte umfasst:
- Übermitteln einer Zeichenfolge (70) von einem ersten Gerät (10) des Gebäudeautomationssystems (10) an eine mit dem ersten Gerät (10) zum Datenaustausch verbundene Registrierungsstelle (30), wobei bevorzugt die Registrierungsstelle (30) ein Server, besonders bevorzugt ein cloud-basierter Server, ist oder aufweist;
- Registrieren der Zeichenfolge durch die Registrierungsstelle (30);
- Aussenden eines die Zeichenfolge repräsentierenden Audiosignals (40) durch das erste Gerät (10), bevorzugt mit einem Lautsprecher (50) des ersten Geräts (10);
- Empfangen des Audiosignals (40) durch ein zweites Gerät (20) des Gebäudeautomationssystems (100), bevorzugt mit einem Mikrophon (60) des zweiten Geräts (20);
- Erfassen der mit dem empfangenen Audiosignal repräsentierten Zeichenfolge (70) mit dem zweiten Gerät (20);
- Übermitteln der Zeichenfolge von dem zweiten Gerät (20) an die Registrierungsstelle (30), wobei die Registrierungsstelle (30) zum Datenaustauch mit dem zweiten Gerät (20) verbunden ist;
- Zuordnen des ersten Geräts (10) und des zweiten Geräts (20) durch die Registrierungsstelle (30).

2. Verfahren nach Anspruch 1, bei dem vor dem Übermitteln der Zeichenfolge (70) von dem ersten Gerät (10) an die Registrierungsstelle (30) die Zeichenfolge (70) von dem ersten Gerät (10) erzeugt wird, wobei bevorzugt das erste Gerät (10) bei dem Erzeugen der Zeichenfolge (70) eine zufällige Zeichenfolge erzeugt.

3. Verfahren nach einem der vorangegangenen Ansprüche 1 bis 2, dem das Audiosignal (40) eine oder mehrere Wellen mit einer jeweiligen Frequenz umfasst, wobei eine bestimmte Frequenz und/oder Amplitude der Welle ein Zeichen der Zeichenfolge (70) repräsentiert.

4. Verfahren nach einem der vorangegangenen Ansprüche 1 bis 3, wobei bei oder nach dem Erfassen der mit dem empfangenen Audiosignal (40) repräsentierten Zeichenfolge (70) ein Spektrum (200) des von dem zweiten Gerät erfassten Audiosignals erstellt wird, und die Zeichenfolge (70) basierend auf dem erstellten Spektrum (200) erfasst wird.

5. Verfahren nach einem der vorangegangenen Ansprüche 1 bis 4, bei dem vor dem Aussenden des Audiosignals (40) die Zeichenfolge (70) und/oder das Audiosignal (40) moduliert wird, bevorzugt mit einer Frequenz größer 18 kHz, besonders bevorzugt mit einer Frequenz größer als 20 kHz, und/oder wobei beim Erfassen der von dem Audiosignal (40) repräsentierten Zeichenfolge (70) das Audiosignal (40) demoduliert wird.

6. Verfahren nach einem der vorangegangenen Ansprüche 1 bis 5, bei dem das erste Gerät (10) ein Türkommunikationsgerät, bevorzugt eine Wohnungsstation eines Türkommunikationssystems, ist oder aufweist, und/oder wobei das zweite Gerät (20) ein mobiles Gerät, bevorzugt ein Smartphone, ist oder aufweist.

7. Verfahren nach einem der vorangegangenen Ansprüche 1 bis 6, bei dem die Registrierungsstelle (30) nach dem Zuordnen eine Zuordnungsbestätigung an das erste Gerät (10) und/oder das zweite Gerät (20) übermittelt.

8. Verfahren nach einem der vorangegangenen Ansprüche 1 bis 7, bei dem nach dem Zuordnen das erste Gerät (10) mit dem zweiten Gerät (20) über die Registrierungsstelle (30) kommuniziert, und/oder das zweite Gerät (20) mit dem ersten Gerät (10) über die Registrierungsstelle (30) kommuniziert.

9. Verfahren nach einem der vorangegangenen Ansprüche 1 bis 8, bei dem beim Registrieren der Zeichenfolge (70) die Registrierungsstelle (30) die Zeichenfolge (70) in einer Datenbank hinterlegt und/oder mit einer eindeutigen Kennung des ersten Geräts (10) verknüpft, und/oder wobei beim Zuordnen die Registrierungsstelle (30) die von dem zweiten Gerät (20) empfangene Zeichenfolge (70) mit in einer oder der Datenbank hinterlegten Zeichenfolgen (70) auf Übereinstimmung abgleicht.

10. Verfahren nach einem der vorangegangenen Ansprüche 1 bis 9, wobei nach dem Zuordnen das erste Gerät (10) ein eine Statusmeldung des ersten Geräts (10) repräsentierendes Status-Audiosignal aussendet, wobei bevorzugt das zweite Gerät (20) das von dem ersten Gerät (10) ausgesendete Status-Audiosignal empfängt und die den Status des ersten Geräts (10) erfasst.

11. Verfahren nach einem der vorangegangenen Ansprüche 1 bis 10, bei dem das Erzeugen der Zeichenfolge mit dem ersten Gerät (10) und/oder das Aussenden des Audiosignals (40) durch ein Betätigen eines Betätigungselements des ersten Geräts (10) initiiert wird, und/oder nach einem Betätigen eines oder des Betätigungselements des ersten Geräts (10) erfolgt.

12. Gebäudeautomationssystem (100), umfassend ein erstes Gerät (10) und ein zweites Gerät (20) sowie eine Registrierungsstelle (30), wobei das erste Gerät (10) und das zweite Gerät (20) dazu eingerichtet sind, über die Registrierungsstelle (30) miteinander zu kommunizieren, wobei das erste Gerät (10) und das zweite Gerät (20) nach einem Verfahren der vorangegangenen Ansprüche 1 bis 10 zugeordnet sind.

13. Gebäudeautomationssystem (100) nach Anspruch 12, bei dem das erste Gerät (10) ein Türkommunikationsgerät, bevorzugt eine Wohnungsstation eines Türkommunikationssystems, ist oder aufweist, und/oder wobei das zweite Gerät (20) ein mobiles Gerät, bevorzugt ein Smartphone, ist oder aufweist.

14. Gebäudeautomationssystem (100) nach Anspruch 12 oder 13, bei dem die Registrierungsstelle (30) cloud-basiert ist, und/oder drahtlos mit dem ersten Gerät (10) und dem zweiten Gerät (20) verbunden ist, und/oder bei dem die Registrierungsstelle (30) kabelgebunden mit dem ersten Gerät (10) und/oder dem zweiten Gerät (20) verbunden ist.

15. Gebäudeautomationssystem (100) nach einem der vorangegangenen Ansprüche 12 bis 14, bei dem das erste Gerät (10) ein Betätigungselement aufweist, bevorzugt einen Knopf, Taster oder Schalter, wobei das erste Gerät (10) dazu eingerichtet ist, nach Betätigen des Betätigungselements die Zeichenfolge zu erzeugen und/oder das Audiosignal auszusenden.

## Claims

1. Method for coupling two devices (10, 20) of a building automation system (100), wherein the method comprises the steps:
- transmitting a character string (70) from a first device (10) of the building automation system (10) to a registration point (30) connected to the first device (10) for data exchange, wherein preferably the registration point (30) is or has a server, particularly preferably a cloud-based server;
- registering the character string by the registration point (30);
- emitting an audio signal (40) representing the character string by the first device (10), preferably with a loudspeaker (50) of the first device (10);
- receiving the audio signal (40) by a second device (20) of the building automation system (100), preferably with a microphone (60) of the second device (20);
- detecting the character string (70) represented with the received audio signal with the second device (20);
- transmitting the character string from the second device (20) to the registration point (30), wherein the registration point (30) is connected to the second device (20) for data exchange;
- assigning the first device (10) and the second device (20) by the registration point (30).

2. Method according to claim 1, in which, before the character string (70) is transmitted from the first device (10) to the registration point (30), the character string (70) is generated by the first device (10), wherein preferably the first device (10) generates a random character string during the generation of the character string (70).

3. Method according to one of the preceding claims 1 to 2, in which the audio signal (40) comprises one or more waves with a respective frequency, wherein a specific frequency and/or amplitude of the wave represents a character of the character string (70).

4. Method according to one of the preceding claims 1 to 3, wherein, during or after the detection of the character string (70) represented with the received audio signal (40), a spectrum (200) of the audio signal detected by the second device is created, and the character string (70) is detected based on the created spectrum (200).

5. Method according to one of the preceding claims 1 to 4, in which, before the emission of the audio signal (40), the character string (70) and/or the audio signal (40) is modulated, preferably with a frequency greater than 18 kHz, particularly preferably with a frequency greater than 20 kHz, and/or wherein, during the detection of the character string (70) represented by the audio signal (40), the audio signal (40) is demodulated.

6. Method according to one of the preceding claims 1 to 5, in which the first device (10) is or has a door communication device, preferably a dwelling station of a door communication system, and/or wherein the second device (20) is or has a mobile device, preferably a smartphone.

7. Method according to one of the preceding claims 1 to 6, in which, after the assignment, the registration point (30) transmits an assignment confirmation to the first device (10) and/or the second device (20).

8. Method according to one of the preceding claims 1 to 7, in which, after the assignment, the first device (10) communicates with the second device (20) via the registration point (30), and/or the second device (20) communicates with the first device (10) via the registration point (30).

9. Method according to one of the preceding claims 1 to 8, in which, during the registration of the character string (70), the registration point (30) stores the character string (70) in a database and/or links it with a unique identifier of the first device (10), and/or wherein, during the assignment, the registration point (30) compares the character string (70) received from the second device (20) with character strings (70) stored in a or the database for correspondence.

10. Method according to one of the preceding claims 1 to 9, wherein, after the assignment, the first device (10) emits a status audio signal representing a status message of the first device (10), wherein preferably the second device (20) receives the status audio signal emitted by the first device (10) and detects the status of the first device (10).

11. Method according to one of the preceding claims 1 to 10, in which the generation of the character string with the first device (10) and/or the emission of the audio signal (40) is initiated by an actuation of an actuation element of the first device (10), and/or takes place after an actuation of a or the actuation element of the first device (10).

12. Building automation system (100), comprising a first device (10) and a second device (20) and a registration point (30), wherein the first device (10) and the second device (20) are configured to communicate with one another via the registration point (30), wherein the first device (10) and the second device (20) are assigned according to a method of the preceding claims 1 to 10.

13. Building automation system (100) according to claim 12, in which the first device (10) is or has a door communication device, preferably a dwelling station of a door communication system, and/or wherein the second device (20) is or has a mobile device, preferably a smartphone.

14. Building automation system (100) according to claim 12 or 13, in which the registration point (30) is cloud-based, and/or is connected wirelessly to the first device (10) and the second device (20), and/or in which the registration point (30) is connected by wire to the first device (10) and/or the second device (20).

15. Building automation system (100) according to one of the preceding claims 12 to 14, in which the first device (10) has an actuation element, preferably a button, pushbutton or switch, wherein the first device (10) is configured to generate the character string and/or to emit the audio signal after actuation of the actuation element.

## Revendications

1. Procédé de couplage de deux dispositifs (10, 20) d'un système d'automatisation du bâtiment (100), le procédé comprenant les étapes suivantes :
- transmettre une séquence de caractères (70) d'un premier dispositif (10) du système d'automatisation du bâtiment (10) à un centre d'enregistrement (30) relié au premier dispositif (10) pour l'échange de données, le centre d'enregistrement (30) étant de préférence un serveur, particulièrement de préférence un serveur basé sur le cloud, ou comprenant un tel serveur ;
- enregistrer la séquence de caractères par le centre d'enregistrement (30) ;
- émettre un signal audio (40) représentant la séquence de caractères par le premier dispositif (10), de préférence à l'aide d'un haut-parleur (50) du premier dispositif (10) ;
- recevoir le signal audio (40) par un second dispositif (20) du système d'automatisation du bâtiment (100), de préférence à l'aide d'un microphone (60) du second dispositif (20) ;
- détecter la séquence de caractères (70) représentée par le signal audio reçu à l'aide du second dispositif (20);
- transmettre la séquence de caractères du second dispositif (20) au centre d'enregistrement (30), le centre d'enregistrement (30) étant relié au second dispositif (20) pour l'échange de données ;
- associer le premier dispositif (10) et le second dispositif (20) par le centre d'enregistrement (30).

2. Procédé selon la revendication 1, dans lequel, avant la transmission de la séquence de caractères (70) du premier dispositif (10) au centre d'enregistrement (30), la séquence de caractères (70) est générée par le premier dispositif (10), le premier dispositif (10) générant de préférence une séquence de caractères aléatoire lors de la génération de la séquence de caractères (70).

3. Procédé selon l'une des revendications précédentes 1 à 2, dans lequel le signal audio (40) comprend une ou plusieurs ondes ayant chacune une fréquence respective, une fréquence et/ou une amplitude déterminée de l'onde représentant un caractère de la séquence de caractères (70).

4. Procédé selon l'une des revendications précédentes 1 à 3, dans lequel, lors ou après la détection de la séquence de caractères (70) représentée par le signal audio (40) reçu, un spectre (200) du signal audio détecté par le second dispositif est établi et la séquence de caractères (70) est détectée sur la base du spectre (200) établi.

5. Procédé selon l'une des revendications précédentes 1 à 4, dans lequel, avant l'émission du signal audio (40), la séquence de caractères (70) et/ou le signal audio (40) est modulé, de préférence avec une fréquence supérieure à 20 kHz, et/ou dans lequel, lors de la détection de la séquence de caractères (70) représentée par le signal audio (40), le signal audio (40) est démodulé.

6. Procédé selon l'une des revendications précédentes 1 à 5, dans lequel le premier dispositif (10) est ou comprend un dispositif de communication de porte, de préférence une station d'appartement d'un système de communication de porte, et/ou dans lequel le second dispositif (20) est ou comprend un dispositif mobile, de préférence un smartphone.

7. Procédé selon l'une des revendications précédentes 1 à 6, dans lequel le centre d'enregistrement (30), après l'association, transmet une confirmation d'association au premier dispositif (10) et/ou au second dispositif (20).

8. Procédé selon l'une des revendications précédentes 1 à 7, dans lequel, après l'association, le premier dispositif (10) communique avec le second dispositif (20) via le centre d'enregistrement (30), et/ou le second dispositif (20) communique avec le premier dispositif (10) via le centre d'enregistrement (30).

9. Procédé selon l'une des revendications précédentes 1 à 8, dans lequel, lors de l'enregistrement de la séquence de caractères (70), le centre d'enregistrement (30) enregistre la séquence de caractères (70) dans une base de données et/ou l'associe à un identifiant unique du premier dispositif (10), et/ou dans lequel, lors de l'association, le centre d'enregistrement (30) compare la séquence de caractères (70) reçue du second dispositif (20) avec des séquences de caractères (70) enregistrées dans une ou la base de données pour vérifier la concordance.

10. Procédé selon l'une des revendications précédentes 1 à 9, dans lequel, après l'association, le premier dispositif (10) émet un signal audio d'état représentant un message d'état du premier dispositif (10), le second dispositif (20) recevant de préférence le signal audio d'état émis par le premier dispositif (10) et détectant l'état du premier dispositif (10).

11. Procédé selon l'une des revendications précédentes 1 à 10, dans lequel la génération de la séquence de caractères avec le premier dispositif (10) et/ou l'émission du signal audio (40) est initiée par une actionnement d'un élément d'actionnement du premier dispositif (10), et/ou a lieu après une actionnement d'un ou de l'élément d'actionnement du premier dispositif (10).

12. Système d'automatisation du bâtiment (100), comprenant un premier dispositif (10) et un second dispositif (20) ainsi qu'un centre d'enregistrement (30), le premier dispositif (10) et le second dispositif (20) étant conçus pour communiquer entre eux via le centre d'enregistrement (30), le premier dispositif (10) et le second dispositif (20) étant associés selon un procédé des revendications précédentes 1 à 10.

13. Système d'automatisation du bâtiment (100) selon la revendication 12, dans lequel le premier dispositif (10) est ou comprend un dispositif de communication de porte, de préférence une station d'appartement d'un système de communication de porte, et/ou dans lequel le second dispositif (20) est ou comprend un dispositif mobile, de préférence un smartphone.

14. Système d'automatisation du bâtiment (100) selon la revendication 12 ou 13, dans lequel le centre d'enregistrement (30) est basé sur le cloud, et/ou est relié sans fil au premier dispositif (10) et au second dispositif (20), et/ou dans lequel le centre d'enregistrement (30) est relié de manière filaire au premier dispositif (10) et/ou au second dispositif (20).

15. Système d'automatisation du bâtiment (100) selon l'une des revendications précédentes 12 à 14, dans lequel le premier dispositif (10) comprend un élément d'actionnement, de préférence un bouton, un bouton-poussoir ou un interrupteur, le premier dispositif (10) étant conçu pour générer la séquence de caractères et/ou émettre le signal audio après actionnement de l'élément d'actionnement.
